# EUROPEAN PATENT APPLICATION

(11) **EP 0 536 453 A1**
(43) Date of publication of application: **14.04.1993**
(21) Application number: 91309364.7
(22) Date of filing: 10.10.1991
(51) Int. Cl.: B60R 1/06, B60S 1/60

(54) **Wiper device for a motor vehicle rear view mirror**

(71) Applicant: Han, Ivan, Taipei Hsien (TW)
(72) Inventor: Han, Ivan, Taipei Hsien (TW)
(74) Representative: Jones, Ian

(57) **Abstract**

A wiper device for cleaning a motor vehicle rear view mirror, comprising a water sprayer unit (40) connected to a motor vehicle's windshield washer to spray water over a motor vehicle's rear view mirror, a wiper (32) fastened between two slides (31,31') and driven by a motor (11) via a crossed belt to remove water and dust from said rear view mirror, and a control circuit (60) controlled to drive said motor (11) making a change on its rotary direction.

## Description

The present invention relates to a wiper device and relates more particularly to a wiper device for removing water and dust from a motor vehicle rear view mirror.

The present invention provides a wiper device for cleaning a motor vehicle's rear view mirror which comprises a frame mounted on the body of a motor vehicle to hold a rear view mirror, two slides driven by an electric winch through a crossed belt to alternatively slide on said frame back and forth, a wiper fastened in said two slides and carried to rub against the glass on said rear view mirror, and a water sprayer connected to a motor vehicle's windshield washer to spray water over the glass on said rear view mirror for cleaning.

The present invention will now be described by way of examples only, with reference to the annexed drawings, in which:
Fig. 1 is a perspective view of a wiper device embodying the present invention;
Fig. 2 is a front structural view thereof;
Fig. 2-1 is a schematic plan view of a first type of rear view mirror;
Fig. 2-2 is a schematic plan view of a second type of rear view mirror;

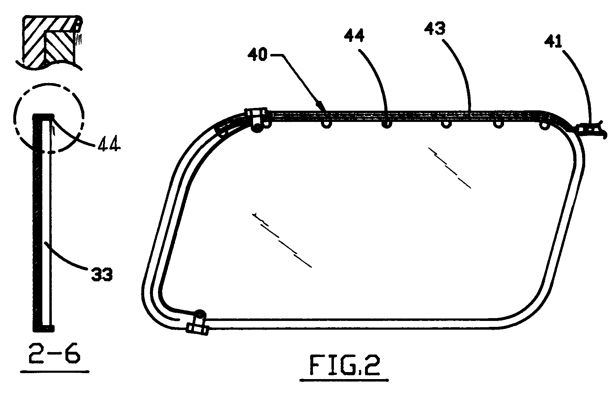

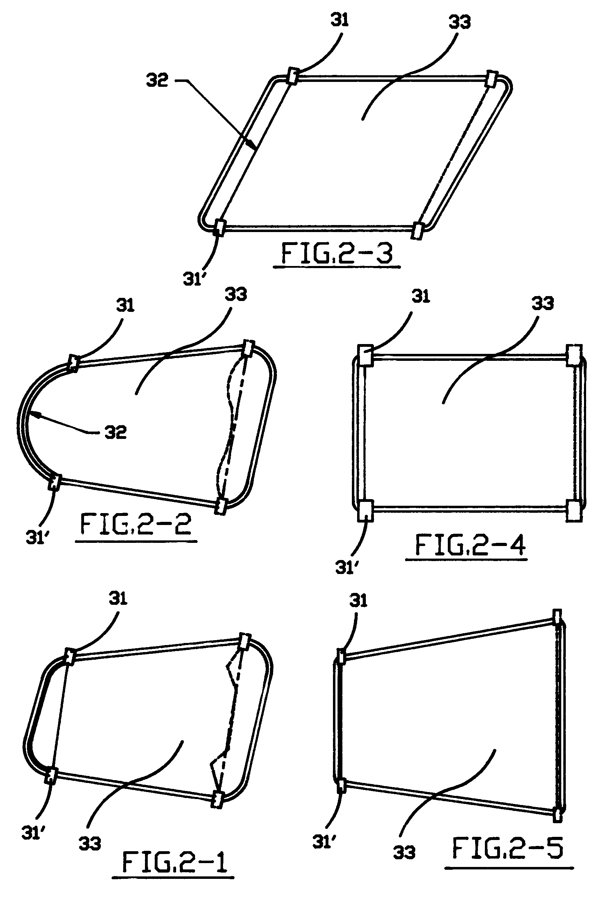

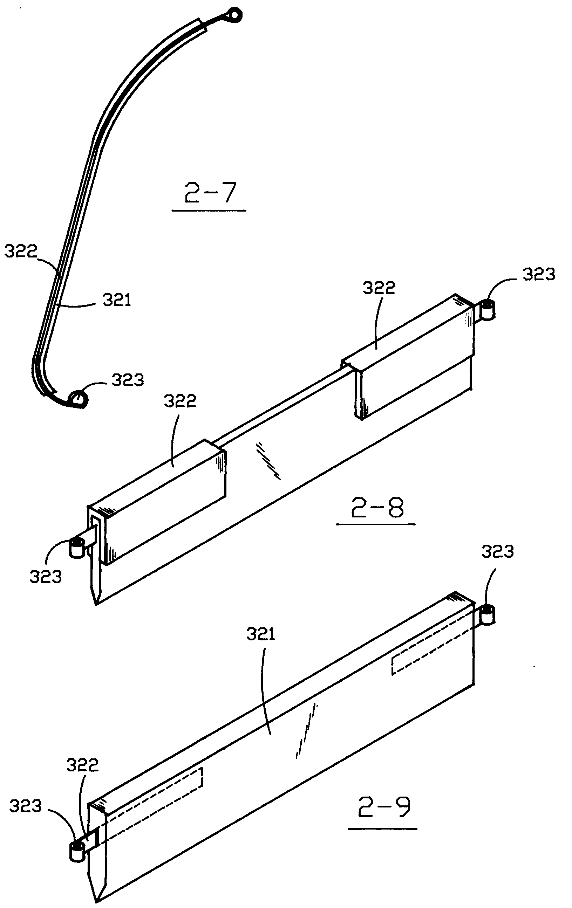

Fig. 2-3 is a schematic plan view of a third type of rear view mirror;
Fig. 2-4 is a schematic plan view of a fourth type of rear view mirror;
Fig. 2-5 is a schematic plan view of a fifth type of rear view mirror;
Fig. 2-6 is a schematic plan view of the spray pipe showing the spray nozzles;
Fig. 2-7 illustrates a first type of wiper as constructed according to the present invention;
Fig. 2-8 illustrates a second type of wiper as constructed according to the present invention;
Fig. 2-9 illustrates a third type of wiper as constructed according to the present invention;

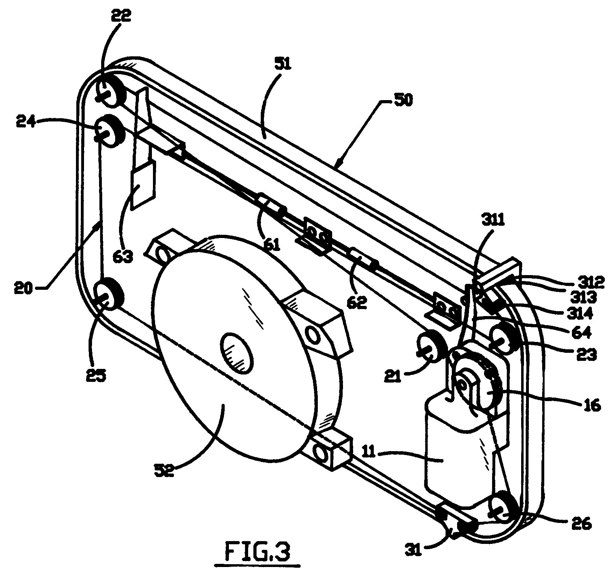

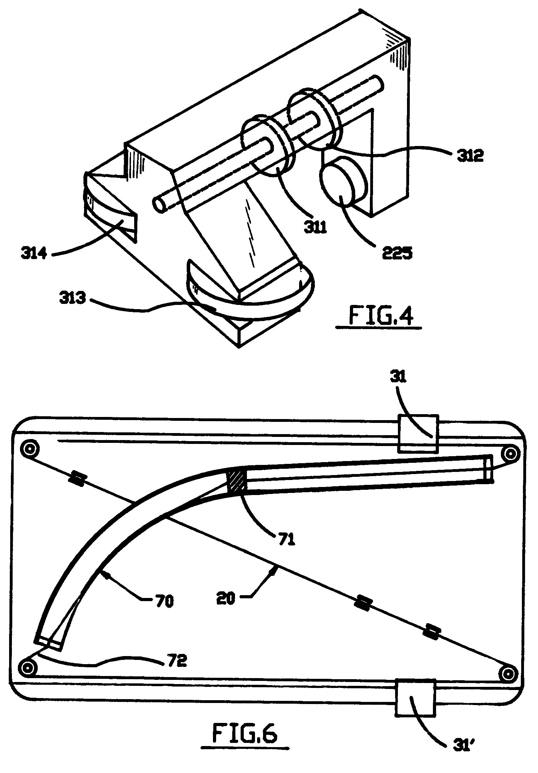

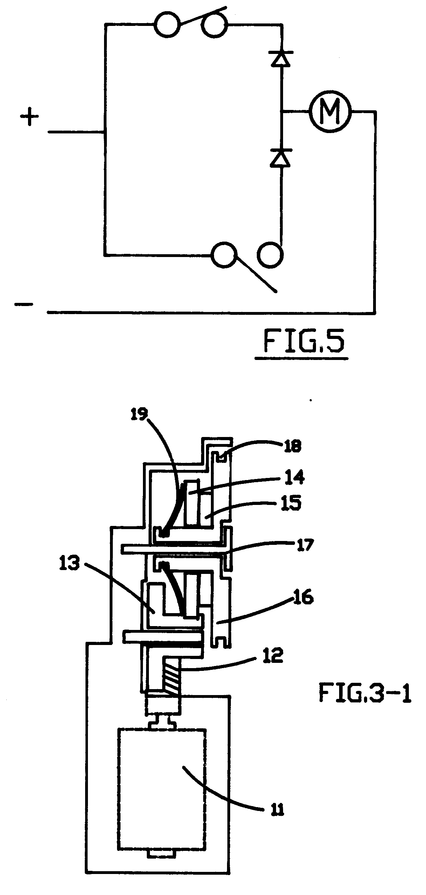

Fig. 3 is a rear perspective view of the wiper device of the present invention;
Fig. 3-1 is a schematic plan view showing the transmission of the driving power from the motor to the pulley through the worm, the worm gear, the gear and the lining;
Fig. 4 is a perspective view showing the structure of the slide;
Fig. 5 is a control circuit diagram of the control circuit unit; and
Fig. 6 illustrates an alternate form of the present invention in which a pneumatic cylinder is used to drive the pull wire unit.

In motor vehicles, a windshield wiper is generally provided for removing water and dust from the windshield glass during the rain, so that a motor vehicle's driver can see through the windshield clearly. Since the rear view mirrors of a motor vehicle may also be contaminated by dust or blocked up by rain water under the rain, they must be protected against rain water and washed regularly so as to clearly reflect the images of objects. Several rainhood structures for protecting a motor vehicle rear view mirror against the rain have been know, examples of which have been disclosed in U.S. Pat. Nos. 4,834,157; 4,620,777; 4,668,085; and 4,750824. However, a rainhood according to the prior art may obstruct a driver from clearly viewing the image reflected by a vehicle rear view mirror and may be contaminated by dust easily. The present invention has been accomplished to provide a wiper device which can be automatically controlled to remove dust and water from a motor vehicle rear view mirror.

Turning now to the annexed drawings in detail, therein illustrated is a wiper device as constructed in accordance with the present invention which is generally comprised of a driving unit 10, a pull wire unit 20, a wiper unit 30, a water sprayer unit 40, a frame unit 50, and a control circuit unit 60.

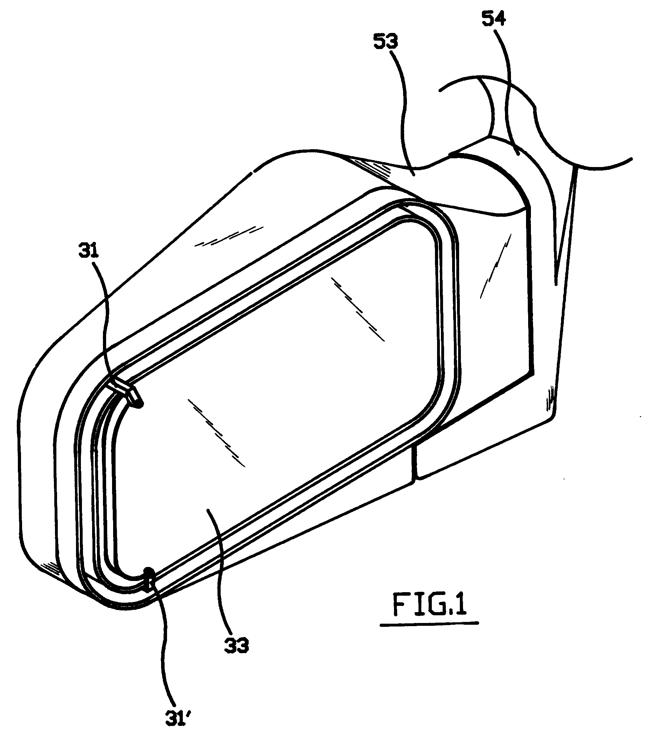

Referring to Figs. 1, 2, 3, 3-1 and 3-2, the driving unit 10 comprises a motor 11, a worm 12, a worm gear 13, a gear 14, a lining 15, a pulley 16 and a clamp 17. The lining 15 is set between the gear 14 and the pulley 16 and retained in position by the clamp 17. Because of the effect of the clamp 17, the pulley 16 is caused to rotate by the lining 15 when the gear 14 is driven to rotate by the motor 11 via the worm 12 and the worm gear 13. When the pulley 16 is stopped, the inertia force from the motor 11 upon its shut-off will be transmitted to the lining 15, and therefore, the idle running of the lining 15 protects the gear 14 from damage.

Referring to Figs. 3 and 3-1, the pull wire unit 20 is comprised of a wire extending from a fixing hole 17 on the pulley 16 and wound around an annular groove 18 therein and then delivered through a first wheel 21, a second wheel 22, a third wheel 23, a fourth wheel 24, a fifth wheel 25 and a six wheel 26, and then, returned back to the pulley 16. When the pulley 16 is rotated, a first slide 31, which is mounted on the pull wire unit 20 at the top, and a second slide 31', which is mounted on the pull wire unit 20 at the bottom and disposed in parallel with said first slide 31, will be simultaneously carried to move in horizontal direction.

Referring to Figs. 2 and 2-1 through 2-5, the casing of a motor vehicle rear view mirror may be variously shaped. Figs. 2-1 through 2-5 show five different casings for a motor vehicle rear view mirror. The mirror for a motor vehicle rear view mirror may be made from a flat sheet of glass or from a sheet of glass which curves outwards in X-axis direction, Y-axis direction or Z-axis direction. A wiper unit 30 in accordance with the present invention may be alternatively made to fit different casing and different glass. There are three different types of wiper unit 30 for choice. A first type of wiper unit 30 is provided to match with the casings shown in Figs. 2-1 and 2-2. In this alteration, a wiper 32 is fastened between the first and second slides 31, 31' by lock pins 314, which wiper 32 is comprised of a rubber blade 321 covered over a holder 322 which is made from titanium alloy or plastic material (as shown in Fig. 2-7). The wiper 32 is made in a substantially U-shaped configuration. When the first and second slides 31, 31' are moved to slide, the wiper 32 is longitudinally stretched causing the rubber blade 321 to rub against the glass 33 of the motor vehicle rear view mirror to which the present invention is mounted. A second type of wiper unit 30, as shown in Fig. 2-8, will not be caused to deform when it is carried to move in horizontal direction. This type of wiper unit 30 is suitable for the casings as shown in Figs. 2-3 and 2-4 and suitable for removing water and moisture from a mirror of convex lens. A third type of wiper unit 30, as shown in Fig. 2-9, is stretchable and suitable for the casing as shown in Fig. 2-5. In this type of wiper unit 30, the holder 322 is comprised of two metal clamps clamped on the rubber blade 321 at the top edge thereof at two opposite ends.

Referring to Figs. 3, 3-1 and 4, the first and second slides 31, 31' are symmetrical in structure, each of which is comprised of a plurality of rollers 312, 312', 313, 313' and arranged to slide on the frame 51 of the frame unit 50. The first slide 31 further comprises a trigger rod 311 at one side which may be alternatively moved to contact the switches 61, 61' at two opposite ends causing the motor 11 to change its rotary direction. As indicated, the two opposite ends of the wiper 32 of the wiper unit 30 are secured to the first and second slides 31, 31' by lock pins 314. The slides 31, 31' are strong enough to absorb the torsional force from the wiper 32 when the wiper is stretched for removing water and dust from a motor vehicle rear view mirror.

Referring to Figs. 2 and 2-6, the water spray unit 40 is comprised of a connecting pipe 41 connected to a motor vehicle's windshield washer, and a spray pipe 43 connected to said connecting pipe 41 through a connector 42. The spray pipe 43 is fastened in the casing of a motor vehicle rear view mirror around the periphery of the glass 33 thereof, having a plurality of spray nozzles 45 made thereon at equal interval. Through the spray nozzles 45, water from the windshield washer can be sprayed over the glass 33 so that the wiper 32 can be moved to efficiently clean the glass 33.

Referring to Figs. 3 and 5, the control circuit 60 is comprised of two diodes 61, 62, and two switches 63, 64. The switch 63 (or 64) can be a leaf spring switch or micro-switch. When the motor 11 is turned on, the slides 31, 31' will be moved rightwards (or leftwards). As soon as the switch 63 or 64 is touched, power supply is cut off from the motor 11. When the motor 11 is stopped, the inertia force from the motor 11 will be absorbed by the lining 15 so that the gear 14 and the pulley 16 will not be damaged. When the motor 11 is stopped, i.e. the switch 63 is opened, positive electricity passes through D1 61 and negative electricity passes through the motor 11 to turn on D2 62, and therefore, the motor 11 is caused to rotate in a reverse direction. When the motor 11 is caused to rotate in a reverse direction, the slides 31, 31' are moved leftwards (rightwards). As soon as the switch 64 (or 63) is touched, the motor 11 will be caused to change its rotary direction again. Therefore, the slides 31, 31' will be carried to alternatively move back and forth.

Referring to Figs. 1, 2, 3 and 4, the frame unit 50 is comprised of a frame 51 covered with a covering 53 and attached to a mount 54 which can be conveniently fastened in a motor vehicle's side window, and a rotary device 52 for controlling the angular position of the glass 33. The rotary device 52 which controls the angular position of the glass 33 of a motor vehicle's rear view mirror is of the known art and not within the scope of the present invention.

Referring to Fig. 6, therein illustrated is an alternate form of the present invention which is suitable for use in a truck or bus which comprises an air compressor. In this embodiment, a pneumatic cylinder 70 is used to replace the motor 11 which is used in the aforesaid first embodiment of wiper device. When the pneumatic cylinder 70 is caused to move the piston 71 back and forth, the pull wire 72 which is secured thereto is moved accordingly, and therefore, the slides 31, 31' are carried to slide. This structure eliminates the arrangement of the switches and the diodes which are used in the first embodiment of the present invention.

## Claims

1. A wiper device for cleaning a motor vehicle rear view mirror comprising a frame unit having a frame for fastening to a motor vehicle body to hold the rear view mirror, the wiper device comprising
a driving unit mounted by the frame unit,
a pull wire unit mounted by the frame unit and drivable by the driving unit, the unit comprising a wire entrained on a plurality of wheels and driven by the driving unit to carry two slides toward either of two limit positions at two opposite ends;
a wiper unit comprising a wiper carried by the two slides and movable by the pull wire unit to wipe the rear view mirror; and
a control unit to control operation of the driver unit.

2. A wiper device as claimed in claim 1 wherein the driving unit comprises a motor, a worm mounted on the output shaft of the motor to drive a gear, a lining engaged with the gear at one side, and a pulley engaged with the lining at one side opposite to the gear, wherein the pull wire is wound on the pulley to be driven thereby, and wherein the control unit comprises a control circuit comprising two switches, each preferably a micro-switch, a photoelectric switch or a proximity switch, and two diodes connected to the switches in series in reverse directions and connected to the motor to control the motor to alternately rotate clockwise and counter-clockwise so as to set the two slides at the two limit positions alternately.

3. A wiper device as claimed in claim 2 wherein one of the two slides has a trigger rod at one side which is moved alternately to contact a respective one of the two switches to cause the motor to change its rotary direction.

4. A wiper device as claimed in claim 2 or 3 wherein the lining between the gear and the pulley is retained by a clamp to cause the pulley to rotate by means of friction force when the gear is driven to rotate by the motor via said worm and to allow the gear and the pulley to run idly at the instant when the motor is stopped between changes in its rotary direction.

5. A wiper device as claimed in claim 1 wherein the driving unit comprises a pneumatic cylinder having a piston therein to carry the two slides to move back and forth alternately via the pull wire unit.

6. A wiper device as claimed in any preceding claim wherein the wire is wound around the wheels in the form of a crossed belt for carrying the two slides in the same direction.

7. A wiper device as claimed in any preceding claim wherein the wiper of the wiper unit is a metal plate or metal wire covered with a layer of rubber or plastics material so that it can be easily stretched or bent.

8. A wiper device as claimed in any one of claims 1-6 wherein the wiper of the wiper unit is comprised of a substantially U-shaped metal strip or metal wire covered with a layer of rubber for removing water and dust from a motor vehicle rear view mirror which has two opposite ends of different width.

9. A wiper device as claimed in any one of claims 1-6 wherein the wiper of the wiper unit comprises a stiff metal holder and a rubber blade for removing water and dust from a motor vehicle rear view mirror which has a uniform width.

10. A wiper device as claimed in any preceding claim wherein the wiper of the wiper unit has opposite ends secured to the two slides by two lock pins which eliminate torsional force from the wiper when the wiper is stretched.

11. A wiper device as claimed in any preceding claim wherein the slides comprise rollers rolling on the frame of the frame unit.

12. A wiper device as claimed in any preceding claim having a water sprayer unit mounted by the frame unit and connected to a motor vehicle's windshield washer to spray water over the rear view mirror.

13. A wiper device as claimed in claim 12 wherein the water sprayer unit comprises a spray pipe arranged around the periphery of the rear view mirror the spray pipe having a plurality of spray nozzles for spraying water over the rear view mirror.
